# EUROPÄISCHE PATENTSCHRIFT

(11) **EP 2 782 179 B1**
(45) Veröffentlichungstag und Bekanntmachung des Hinweises auf die Patenterteilung: **16.09.2015**
(21) Anmeldenummer: 13177796.3
(22) Anmeldetag: 24.07.2013
(51) Int. Cl.: H01M 8/04, F04C 29/02, B60L 11/18, F04B 39/02, H01M 8/10

(54) **Verfahren und Vorrichtung zum Betrieb von Brennstoffzellen**
Method and device for the operation of fuel cells
Procédé et dispositif destinés au fonctionnement de piles à combustible

(30) Priorität: 19.03.2013 EP 13159982
(43) Veröffentlichungstag der Anmeldung: 24.09.2014
(73) Patentinhaber: MAGNA STEYR Engineering AG & Co KG, 8041 Graz (AT)
(72) Erfinder: Mayr, Franz, 8323 St.Marein bei Graz (AT); Ramschak, Erich, 8010 Graz (AT)
(74) Vertreter: Zangger, Bernd

(56) Entgegenhaltungen:
- WO-A1-97/10619
- DE-A1- 19 831 100
- DE-A1- 19 945 323
- FR-A1- 2 863 106
- US-A1- 2005 112 418

## Beschreibung

Die Erfindung betrifft ein Verfahren zum Betreiben eines Brennstoffzellensystems, das an mindestens ein weiteres Bauteil des Antriebs oder in einem stationären System zur Strom-Wärmeerzeugung an mindestens ein weiteres Bauteil dieser Anlage angeschlossen und mit diesem mindesten einem Bauteil oder dieser Anlage in einem Kühl- und / oder Schmierkreislauf verbunden ist, wobei ein wasserbasiertes, ölfreies Kühl- und Schmiermittel verwendet wird, und wobei ein Spülungsvorgang für die Brennstoffzelle angestoßen wird, wenn eine Kontaminierung der Brennstoffzelle durch das wasserbasierte, ölfreie Kühl-und Schmiermittel erkannt wird.

Im Weiteren betrifft die Erfindung eine Vorrichtung für ein Brennstoffzellensystem mit mindestens einer Brennstoffzelle, die eingangsseitig mit einem Verdichter verbunden ist, der wiederum in Verbindung mit mindestens einem Bauteil des Antriebs des Fahrzeugs oder in Verbindung mit mindestens einem Bauteil der stationären Anlage steht.

### Stand der Technik

Die Gewinnung von elektrischer Energie aus chemischen Energieträgern erfolgt zumeist durch Verbrennung und durch Nutzung bzw. weitere Umwandlung der entstehenden heißen Gase in Generatoren. Eine direktere Umwandlungsmöglichkeit bieten Brennstoffzellen. In einer Kombination aus Brennstoffzelle und Elektromotor wird bspw. bei Fahrzeugen ein höherer Wirkungsgrad als in Fahrzeugen mit konventionellen Verbrennungskraftmaschine erzielt. Dabei kommen hauptsächlich Wasserstoff-Sauerstoff-Brennstoffzellen zum Einsatz. Eine Brennstoffzelle besteht aus Elektroden, die durch eine semipermeable Membran oder einen Elektrolyt voneinander getrennt sind.

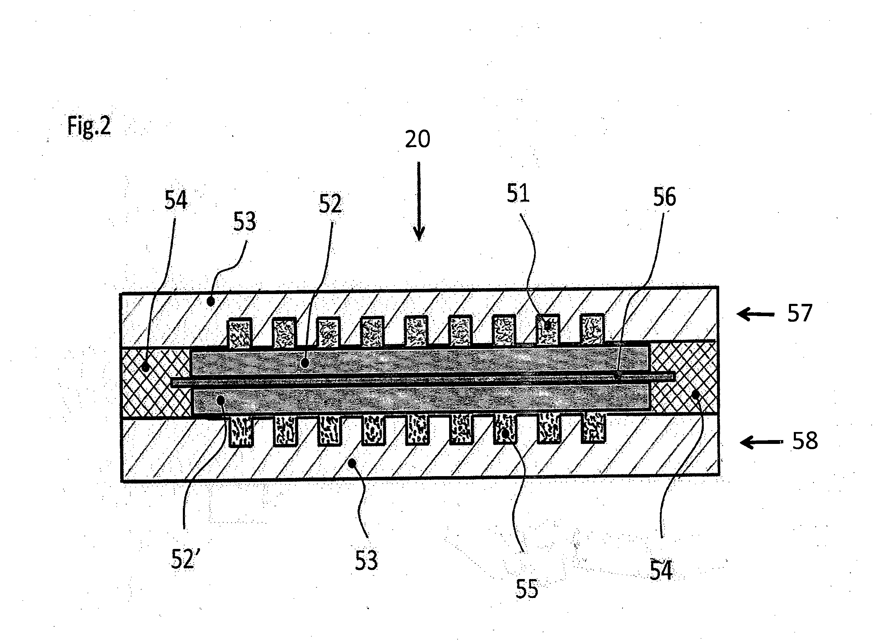

Die Elektrodenplatten oder Bipolarplatten bestehen meist aus Metall, Graphit oder anderen leitfähigen Materialien. Die Energie liefert eine Reaktion von Sauerstoff mit dem Brennstoff, im allgemeinen Wasserstoff. Beide Reaktionspartner werden über die Elektroden kontinuierlich zugeführt. Ein beispielhafter Aufbau ist in der Figur 2 dargestellt. Hier wird als Beispiel einer Brennstoffzelle eine Niedertemperatur-Protonen- Austauschmembran Brennstoffzelle (PEMFC) dargestellt. Die Struktur der Brennstoffzelle 20 wird von zwei Bipolarplatten gebildet, die mit dem Bezugszeichen 53 bezeichnet sind. Die Kathodenseite ist dabei mit dem Bezugszeichen 57 markiert, die Anodenseite mit dem Bezugszeichen 58. Die Bipolarplatten weisen eingefräste Gas-Kanalstrukturen auf. Sie bestehen beispielsweise aus beschichteten Metallen oder leitfähigem Kunststoff, der durch Zugabe von Karbon- Nanoröhrchen elektrisch leitend wird. Die beiden Bipolarplatten 53 werden, wie in der Zeichnung links und rechts dargestellt, von Dichtungsendstücken 54 gehalten und miteinander verbunden. In der Mitte zwischen den beiden Bipolarplatten und gehalten von den Dichtungsendstücken 54 ist eine Membran-Elektrodeneinheit 56 angeordnet. Die katalytisch beschichteten Oberflächen der Membranen-Elektrodeneinheit sind die chemisch aktiven Schichten, an der die Reaktion stattfindet. Die Membran 56 ist protonenleitend, aber gasdicht und leitet Elektronen nicht.

Die Membran 56 befindet sich in getrennten Gasräumen 52 und 52'. Über die Anodenseite 58 wird durch die gefrästen Kanäle 55 Wasserstoff als Brennmaterial in den Gasverteilungsraum 52' eingebracht. Über die Gaskanäle 51 wird Sauerstoff bzw. Luft in den Gasverteilungsraum 52 kathodenseitig verteilt. Protonen aus dem Gasverteilungsraum 52' wandern durch die Membran 56 und reagieren mit den Sauerstoffionen auf der aktiven Schicht der Membran zu Wasser.

Der Elektrolyt, der verwendet wird, ist gegen CO2 beständig allerdings weist er eine gewisse Empfindlichkeit gegen Kohlenmonoxid auf. Da die Reaktionen bei relativ niedrigen Temperaturen ablaufen, stellt die Toleranz gegen Kohlenstoffmonoxid ein Problem dar, da zu viele katalytisch aktive Zentren der Membranoberfläche durch CO-Moleküle blockiert werden können.

PEM-Brennstoffzellen (Proton-Exchange-Membrane benötigen einen Luftverdichter. Bei Systemen mit PEM-Brennstoffzellen ist daher auf der Luftzufuhrseite mindestens ein elektrischer Kompressor oder ein Turbolader in Verwendung, wobei die Anbindung über Lager erfolgt.

Die Lagerstelle , welche sich für gewöhnliche zwischen dem Luftverdichter und einem Antriebsmotor befindet, darf nicht mit Schmiermitteln auf öliger Basis geschmiert werden, da aufgrund von Undichtigkeiten in die Brennstoffzelle gelangende geringste Mengen Öl diese irreversibel schädigen würden. Daher sind im Stand der Technik für derartige Anwendungen teure Lagerkonzepte wie Keramiklager notwendig.

Auch Turbolader mit Schmiermitteln auf öliger Basis können bei einem PEM-BZ-System nicht verwendet werden, da bereits bei geringsten Undichtigkeiten der Dichtringe Ölpartikel an die Kathodenseite der Brennstoffzelle gelangen und diese irreversibel schädigen.

Um dies zu vermeiden werden Turbolader eingesetzt, die meist ein schmiermittelfreies Keramiklagerkonzept haben, dass auf einem Luftpolster oder mit anderen Materialkonzepten magnetisch positioniert rotiert. Diese Verdichter rotieren in einem sehr hohen Drehzahlbereich und sind in der Ausführung sehr teuer.

Aus dem Stand der Technik sind Brennstoffzellen bekannt, bei denen ein Wasserkreislauf eingesetzt wird. In der DE 19945323 A1 ist ein System beschrieben, bei denen Wasser dazu verwendet wird, die Prozessluft zu befeuchten, um eine gute Leitfähigkeit für Protonen durch die Membran zu erhalten, und zum weiteren zum Kühlen und Schmieren des Gasverdichters verwendet wird.

Aus der CN 1423356A ist ein System aus Kompressor und Dekompressor bekannt, das für eine Brennstoffzelle mit einem ölfreien Schmiermittel betrieben wird.

Auch in der DE 198 31 100 A1 wird ein Brennstoffzellensystem nach dem Stand der Technik beschrieben.

Nachteilig bei den im Stand der Technik gewählten Lösungen ist es, dass die Schmierkreisläufe und die Befeuchtungskreisläufe der Brennstoffzelle nicht getrennt sind. Eine Anbindung der Brennstoffzelle an die Komponenten eines Fahrzeugs oder eines stationären Anlagensystems und eine Integration der Schmierkreisläufe ist somit nicht auf einfache Weise möglich.

Es ist daher Aufgabe der Erfindung ein Verfahren für ein Brennstoffzellensystem zu erzeugen, das die Brennstoffzellen in einen Kühl-und Schmierstoffkreislauf auf Wasserbasis einbindet und die Brennstoffzellen in einfacher Art und Weise frei von Kontaminierung spült.

Gelöst wird die Aufgabe mit den Merkmalen des Anspruch 1 und Anspruch 17.

Insbesondere wird die Aufgabe gelöst mit einem Verfahren zum Betreiben eines Brennstoffzellensystems, das in einem Fahrzeug oder stationären Strom-Wärmeerzeugungssystem an mindestens ein weiteres Bauteil des Antriebs oder Systems angeschlossen und mit diesem mindesten einem Bauteil in einem Kühl- und Schmierkreislauf verbunden ist, wobei ein wasserbasiertes, ölfreies Kühl- und Schmiermittel verwendet wird, und wobei ein Spülungsvorgang für die mindestens eine Brennstoffzelle des Brennstoffzellensystems angestoßen wird, wenn eine Kontaminierung der Brennstoffzelle durch das wasserbasierte, ölfreie Kühl-und Schmiermittel erkannt wird.

Das erfindungsgemäße Verfahren hat den Vorteil, dass die Brennstoffzelle in einem Verbund mit anderen Komponenten in einem Fahrzeug od. stationären Strom-Wärmeerzeugungssystem geschmiert und gekühlt werden kann, da das Schmier- und Kühlmittel auf Wasserbasis hergestellt ist.

Es ist weiterhin von Vorteil, wenn das Wasser basierende Schmiermittel ausschließlich wasserlösliche Zusatzstoffe beinhaltet, so dass bei einer Kontamination der Brennstoffzelle durch das Kühl- und Schmiermittel ein Ausspülen möglich ist.

Es ist weiterhin von Vorteil, dass das Brennstoffzellensystem an Hilfsaggregate angeschlossen sein kann, die im Fahrzeug des Weiteren vorhanden sind. Die Hilfsaggregate werden dabei im demselben Kühl- und Schmier-Kreislauf mit dem Wasser basierenden Kühl- und Schmiermittel gekühlt und geschmiert.

Vorteilhafterweise erfolgt das Ausspülen der Brennstoffzelle mit zusätzlichem Wasser, das dem Spülkreislauf zusätzlich zum Betriebskreislauf zugeführt wird. Dadurch ist eine besonders effektive Spülung der Brennstoffzelle möglich.

Vorteilhafterweise wird der Spülvorgang durch eine Messung des Leistungsabfalls der Brennstoffzelle ausgelöst, wobei hier unterschiedlichste Mess- Maßnahmen eingesetzt werden.

Vorteilhafterweise lässt das erfindungsgemäße Verfahren unterschiedliche Spülvorgänge zu. Besonders vorteilhaft ist es dabei, dass die unterschiedlichen Spülvorgänge miteinander kombinierbar sind und beliebig oft wiederholt werden können.

Vorteilhafterweise weist die Vorrichtung für ein Brennstoffzellensystem mit mindestens einer Brennstoffzelle, die eingangsseitig mit einem Verdichter verbunden ist, der wiederum in Verbindung mit mindestens einem Bauteil des Antriebs des Fahrzeugs oder in Verbindung mit mindestens einem Bauteil der stationären Anlage steht, alle Bauteil zur Durchführung des Verfahrens auf.

### Beschreibung der Erfindung

Eine Ausführungsform der Erfindung wird in den Zeichnungen dargestellt und in der nachfolgenden Beschreibung näher erläutert.

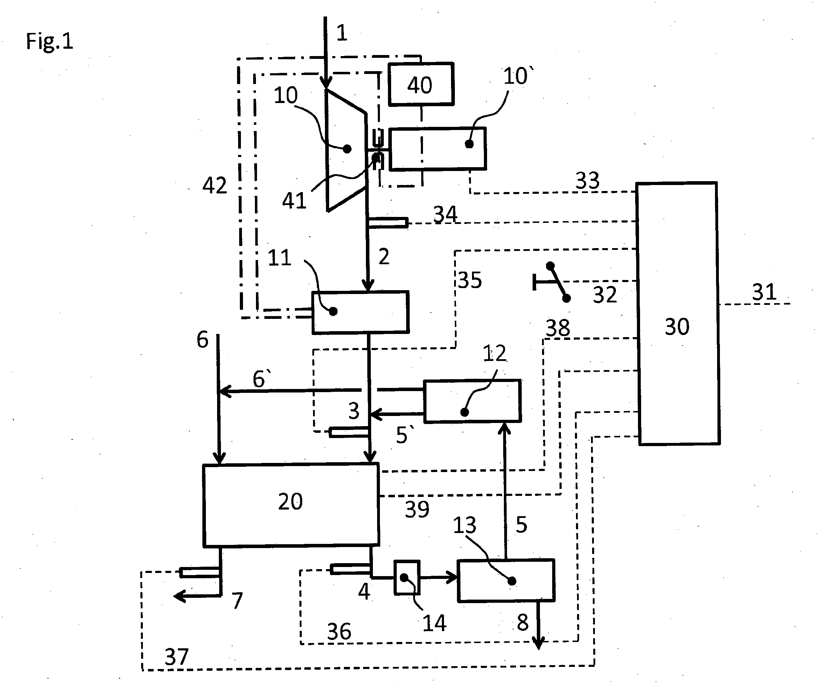

Es zeigt Figur 1 das schematische Bild eines Brennstoffzellensystems,

Fig. 2 ein Schnittbild einer beispielhaften Brennstoffzelle im Stand der Technik.

In Figur 1 ist erfindungsgemäß ein Brennstoffzellensystem dargestellt, bei dem die Luftzufuhr über einen Verdichter mit angeschlossenem, elektrischen Motor über ein Lager erfolgt. Dabei wird ein Kühl-Schmierkreislauf für die Kombination des Wärmetauschers der Brennstoffzellen-Luftzufuhr und der E-Motorwicklungen vom Verdichter dargestellt. Auf die Darstellung der schaltenden Ventile wurde aus Übersichtsgründen verzichtet. Weitere Bauteile, die denselben Schmier- bzw. Kühlmittelkreislauf benutzen könnten, werden ebenfalls nicht dargestellt. Die Ausführungsform ist beispielhaft, es sind auch getrennten Kühl-/Schmier-Kreisläufe in das System integrierbar.

Die Brennstoffzelle 20 ist über einen Zustrom 3 mit einem Wärmetauscher 11 verbunden. Der Wärmetauscher 11 steht über einen Zustrom Wärmetauscher 2 mit einem Luftverdichter 10 in Verbindung. Der Luftverdichter 10 wird über ein Lager 41 mit einem Antriebsmotor 10' verbunden. Auf der Seite des Zustroms zur Brennstoffzelle 3 befindet sich ein Befeuchter 12, der über einen Zustrom Befeuchter eingangsseitig 5' an den Zustrom der Brennstoffzelle 3 angeschlossen ist und einen weiteren Anschluss 6' als Zustrom zum Wasserstoffzulauf 6 aufweist. Ausgangsseitig weist die Brennstoffzelle 20 ein Wasserstoffabgas 7 auf. Zusätzlich liegt ein Abstrom 4 vor, der über ein Druckregelventil 14 mit einem Kondensator 13 verbunden ist. Der Kondensator 13 weist einen Ablauf 8, sowie einen Zustrom zum Befeuchter ausgangsseitig 5 auf.

Das Brennstoffzellensystem weist zudem eine Reglereinheit 30 auf, die über eine Verbindung 31 mit einem Energiespeicher verbunden ist. Weiterhin kann die Reglereinheit über weitere Signalverbindungen mit der Steuerung des Fahrzeugs selbst in Verbindung stehen. Die Reglereinheit weist Verbindungen zu den unterschiedlichen Baugruppen des Brennstoffzellensystems auf.

So besteht eine Steuerverbindung für den Antriebsmotor 33, eine Verbindung zur Messung und Steuerung des Luftmassenstroms 34, eine Verbindung zur Auswertung eines Sensorsignals 35, Sensorsignalverbindungen 36 und 37 für CO2 Auswertungen, sowie die Verbindung zur Auswertung des Stroms der Brennstoffzelle 38, und der Spannung 39. Die Anordnung der Mess- und Steuersignale ist beispielhaft und kann in der Anzahl und Position variieren. Die Steuereinheit 30 muss nicht Teil des Brennstoffzellensystems sein, sondern kann in weiteren im Fahrzeug befindlichen Steuereinheiten integriert sein.

Der Kühl- und Schmier-Kreislauf ist exemplarisch in gestrichelten Linien im oberen Teil der Figur 1 dargestellt. Über eine Pumpeinheit 40 wird das Prozessmittel über Leitungen 42 ein den Wärmetauscher 11 und ein den Antriebsmotor 10' sowie das Lager 41 verteilt.

Bei einem betriebsbereiten Brennstoffzellensystem wird bei einer Leistungsanforderung, z.B. durch Betätigen eines Gaspedales und durch die Signalisierung 32 an die Reglereinheit 30, entsprechend Umgebungsluft 1 von dem Verdichter 10 angesaugt, verdichtet und durch den Kühler/Wärmetauscher 11 zur Brennstoffzelle 20 mit integriertem Kühl- und Heizsystem gefördert. Der Verdichter 10 ist durch den Elektromotor 10' über herkömmlicher Roll- oder Gleitlagerung 41 mit Lagerschmierung angetrieben. Das ölfreie, wasserlösliche Schmiermittel wird in dieser Darstellung durch eine Pumpeinheit mit Kühler 40 durch Leitungen 42 zum Wärmetauscher 11, durch die Lagerstelle 41 und die Wickelköpfe des Elektromotors 10' im Kreis gefördert.

Es ist auch möglich, herkömmliche Turbolader wie sie auch bei Verbrennungskraftmaschinen betriebenen Fahrzeugen verwendet werden, mit einem Lagerschmiermittel auf wässriger oder wässrig-glykolisierter, ölloser Basis zu schmieren und zu kühlen und eine vollständigen Regeneration der Brennstoffzelle nach dem Feststellen eines Leistungsabfalles durch Kontaminierung oder Blockade von aktiven Flächen, verursacht durch Undichtigkeiten im Kompressor bzw. Turbolader durch Ausspülen zu erreichen.

Die Verwendung herkömmlicher Turbolader als Luftverdichter 10 für Brennstoffzellen ist einfach und billig, wobei statt mit Öl nun ein Schmiermittel auf ölloser Basis zum Einsatz kommt, genauer: ein Kühl- und Schmiermittel auf wässriger Basis bzw. wässriger-glykolisierter Basis. Das wässrige Schmiermittel zur Turbolader-Lagerschmierung kann als Getriebeschmiermittel in Fahrzeugen, als Kühlmittel im Fahrzeug-Gesamtsystem, als Kühlmittel der Brennstoffzelle, als Lagerschmiermittel ausschließlich im Verdichter, oder als Kühlmittel für Elektromotoren auch mit ihrer Leistungselektronik und den Batterien wahlweise kombiniert bzw. genutzt werden.

Das verwendete Schmier-und Kühlmittel hat dabei vorzugsweise eine Zusammensetzung aus: 5 - 90 Gewichtsprozent Wasser, insbesondere 10,20,40 - 80 Gewichtsprozent Wasser und /oder 0 - 70 Gewichtsprozent Alkohol, insbesondere 5 - 70 Gewichtsprozent Alkohol oder insbesondere 10 - 50 Gewichtsprozent Alkohol und /oder 0 - 20 Gewichtsprozent Zusatzstoffe andere Art. Die Zusatzstoffe sind dabei beispielsweise Korrosionsschutzmittel, Stabilisatoren, Entschäumer usw, wobei aber alle Zusatzstoffe wasserlöslich sind.

Die Brennstoffzelle 20 wird annähernd zeitgleich mit Wasserstoff über den Zulauf 6 versorgt. Abgasseitig 7 wird bei der Brennstoffzelle 20 auf der Wasserstoffseite das Medium entweder in den Wasserstoff-Zulauf 6 rückgeführt, was in der Figur nicht ausgeführt ist, und/oder dem Kondensator 13 zugeführt. Ebenfalls abgasseitig wird auf der Luftseite die angereicherte Luft mit Wasser entsprechend dem Abstrom 4 über das Druckregelventil 14 dem Kondensator 13 zugeführt. Das gewonnene Wasser wird entweder entsprechend dem Ablauf 8 einer externen Nutzung, oder über die Zustromleitung Befeuchter ausgangsseitig 5 dem Befeuchter 12 zugeführt.

Der Befeuchter 12 stellt über den Zustrom Befeuchter eingangsseitig 5' sicher, dass auf der Luftseite der Feuchtigkeitsanteil im Zustrom der Bernnstoffzelle 3 derart hoch ist, dass kein Austrocknen der Brennstoffzelle -Membran stattfindet. Über die Zustromleitung Wasserstoff 6' kann auch der Wasserstoffseite zusätzlich Feuchtigkeit zugeführt werden.

Wenn bei Undichtigkeiten im Lager 41 das auf Wasser basierende Schmiermittel in die Brennstoffzelle gelangt, wird diese zwar "kontaminiert", aber nicht geschädigt, da mit Spülvorgängen die Brennstoffzelle wieder vollständig regeneriert und gereinigt werden kann.

Das Verfahren ist nicht auf PEMFC -Brennstoffzellen eingeschränkt, da auch andere Brennstoffzellen (zB. AFC _ Alkine Fuel Cell oder DMFC= Direct Methanol Fuel Cell Luft brauchen.

Das im Schmiermittel enthaltene Wasser allein würde keinen Spülvorgang erforderlich machen, sollte das Schmiermittel in Folge von Undichtigkeiten in die Brennstoffzelle gelangen. Sehr wohl aber ist ein Spülvorgang notwendig, wenn das im Schmiermittel allenfalls enthaltene Glykol oder eines der im Schmiermittel enthaltenen sonstigen Zusatzstoffe (z.B Entschäumer, Korrosionsschutzmittel etc in die Brennstoffzelle gelangt.

Da drehzahl-, last-, druck- und/oder temperaturabhängig Undichtigkeiten im Verdichter Richtung Luftförderseite und weiter in Richtung Brennstoffzelle auftreten können, ist im Falle einer Kontaminierung von aktiven Katalysatorflächen in der Brennstoffzelle ein Leistungsabfall erkennbar. Diese Leistungsabfälle durch Kontaminationen können durch Strom-Spannungsmessung, Impedanz- oder Klirrfaktor-Analysen, Abgasmessungen an der Anoden- und/oder Kathodenseite und durch Zyklovoltametrie detektiert werden.

Die in den nachfolgenden Beispielen 1-9 angeführten Spülvorgänge erzeugen mehr Wasser in der Brennstoffzelle, als durch den Normalbetrieb zur Verfügung gestellt wird, wodurch die Kontaminierungen und Verunreinigungen der Brennstoffzelle schneller ausgespült werden.

Abhängig vom Spülvorgang bzw. dessen Dauer regeneriert sich die Brennstoffzelle, d.h. ein vorhandener Schmiermittelfilm auf den aktiven Flächen der Brennstoffzelle löst sich im Wasser und kann mit Luft oder mit dem Brennstoff bzw. befeuchteter Luft ausgeblasen werden.

Abhängig von der Intensität der Kontaminierung und dem Betriebszustand der Brennstoffzelle 20 können zum Spülen erfindungsgemäß unterschiedliche Maßnahmen gesetzt werden.

Beispiel 1: Vom Befeuchter 12 wird über die Zustandsleitung 5' der Luftzufuhrleitung 3 zusätzliche Feuchtigkeit durch die Kanäle 51 der kathodenseitigen 57 Bipolarplatte 53 zugeführt. Dadurch wird das angelagerte, wasserlösliche Schmiermittel in den Kanälen 51 verdünnt und, aus der Membran 56 und der Gasverteilerschicht 52 gelöst und dann kontinuierlich ausgeblasen, bis die Messergebnisse eine Reinigung der Brennstoffzelle 20 ergeben.

Beispiel 2: Über einen Druckregler 14 wird kathodenseitig 57 der Druck in den Kanälen 51 der Brennstoffzelle 20 angehoben, wodurch der prozentuelle Anteil der Luftfeuchtigkeit bei konstanter Feuchtigkeitszufuhr steigt und sich der Ausspülvorgang einstellt.

Beispiel 3: Das Verfahren erfordert eine Verkleinerung des Luft-Lamda-Wertes an der Kathodeseite 57, was bedeutet, dass mehr Feuchtigkeit im Luftstrom vorhanden ist. Das führt dazu, dass das entstehende Produktwasser an den aktiven Schichten der Membran 56 eine höhere, relative Luftfeuchte bildet bzw. auch zur Aerosolbildung und bis zur Flüssigwassertropfenbildung in den kathodenseitigen Kanälen 51 der Brennstoffzelle 20 oder im Auslassbereich der Kathodenluft führt und dadurch den Ausspülvorgang ermöglicht.

Beispiel 4: Durch Abkühlung von befeuchteter Kathodenluft durch eine außenliegende Kühlvorrichtung, die in der Figur nicht dargestellt ist, wird an den Bipolarplatten 53 der Brennstoffzelle 20 während des Betriebs oder auch während der Abschaltprozeduren gespült. Dies dazu führt, dass das entstehende Produktwasser an den aktiven Schichten der Membran 56 eine höhere, relative Luftfeuchte bildet bzw. auch zur Aerosolbildung bis Flüssigwassertropfenbildung in den kathodenseitigen 57 Kanälen 51 der Brennstoffzelle oder im Auslassbereich der Kathodenluft führt und dadurch den Ausspülvorgang ermöglicht.

Beispiel 5: Durch elektrische Leistungsabnahme an der Brennstoffzelle 20 wird der Spülvorgang ebenfalls ausgelöst, da dadurch kurzzeitig das Verhältnis von Luft zu der in Brennstoffzelle 20 noch vorhandenen Wassermengen derart geändert wird, dass an der Kathodenseite 57 ein kurzer Feuchtigkeitsüberschuss entsteht, der den Spülvorgang ermöglicht.

Beispiel 6: Vom Befeuchter 12 wird über die Zustandsleitung 6' der Wasserstoffzufuhrleitung 6 und die Kanäle 55 in der Bipolarplatte 53 zusätzlich Feuchtigkeit zugeführt. Über die Gasverteilerschicht 52' und die Membrane 56 der Brennstoffzelle 20 wird die Feuchtigkeit von der Anodenseite 58 auf die Kathodenseite 57 übertragen. Dadurch wird das wasserlösliche Schmiermittel verdünnt und von der Membran 56 und der Gasverteilerschicht 52 gelöst und kann mit der eingebrachten Luft von der Luftseite ausgeblasen werden.

Beispiel 7: Durch direktes Einbringen von flüssigem Wasser zur Spülung des Kathodenkreises 57 bei elektrisch deaktivierter Brennstoffzelle und anschließendem Ausblasen wird die Brennstoffzelle gereinigt.

Beispiel 8: Durch Einbringen von warmer befeuchteter Luft auf der Kathodenseite 57 bei elektrisch deaktivierter und kalter Brennstoffzelle wird eine Kondensation ausgelöst, die wiederum ein Verdünnen und Lösen des Schmiermittels an der Membran 56 und der Gasverteilerschicht 52 bewirkt und anschließend ausgeblasen werden kann.

Beispiel 9: Durch Kombination von verringertem Druck durch den Druckregler 14 mit erhöhter Luftfeuchtigkeit aus dem Befeuchter 12 in die Zustandsleitung 3 wird ebenfalls ein Lösen und Ausblasen von Kontaminierungen an der Membran erreicht.

Die beispielhaft dargestellten Spülvorgänge können mehrmals hintereinander, oder zeitgleich überlagert und/oder nacheinander kombiniert, durchgeführt werden.

Zeitversetzt zum Spülvorgang kann in allen genannten Beispielen mit Möglichkeiten zum Auswaschen von vorhandenen Schmierfilmen und daraus resultierender Flüssigwasser-, Tropfen- oder Aerosolbildung, das Ausblas- bzw. Trocknungsprozess durchgeführt werden, wobei abhängig vom Spülvorgang entweder die Feuchtigkeit reduziert, oder der Druck und die Temperatur dem geforderten Betriebszustand angepasst, oder die Luftmenge erhöht wird, sodass die Membran 56 auch bis zu einem, die Membran nicht schädigenden Trocknungszustand, getrocknet wird. Der Trocknungsprozess kann dabei schon während der Spülvorgänge angestoßen werden, wird aber immer als Abschlußprozess nach den Spülvorgängen durchgeführt.

Das bei den Spülvorgängen im Kondensator 13 gewonnene und kontaminierte Kondensat wird über den Ablauf 8 einer externen Nutzung zugeführt.

**Legende**

| | | | |
|---|---|---|---|
| | | 32 | Signal Gaspedal |
| 1 | Zufuhr Umgebungsluft | 33 | Steuerung Antriebsmotor |
| 2 | Zustrom Wärmetauscher | 34 | Luftmassenstrom |
| 3 | Zustrom Brennstoffzelle | 35 | Sensorsignal |
| 4 | Abstrom | 36 | Sensorsignal CO2 |
| 5 | Zustrom Befeuchter ausgangsseitig | 37 | Sensorsignal CO2 |
| | | 38 | Signal Strom |
| 5' | Zustrom Befeuchter eingangsseitig | 39 | Spannung |
| 6 | Wasserstoffzulauf | 40 | Pumpeinheit |
| 6' | Zustrom Befeuchter Wasserstoff | 41 | Lager |
| 7 | Wasserstoffabgas | 42 | Leitungen |
| 10 | Luftverdichter | 51 | Kanäle |
| 10' | Antriebsmotor | 52 | Gasverteilerschicht |
| 11 | Wärmetauscher | 53 | Bipolarplatte |
| 12 | Befeuchter | 54 | Dichtungsendstücke |
| 13 | Kondensator | 55 | Kanäle |
| 14 | Druckregelventil | 56 | Membran-Elektrodeneinheit (MEA) |
| 20 | Brennstoffzelle mit Kühl-Heizsystem | | |
| | | 57 | Kathodenseite |
| 30 | Reglereinheit | 58 | Anodenseite |
| 31 | Verbindung Energiespeicher | | |

## Patentansprüche

1. Verfahren zum Betreiben eines Brennstoffzellensystems, das an mindestens ein weiteres Bauteil des Antriebs oder in einem stationären System zur Strom-Wärmeerzeugung an mindestens ein weiteres Bauteil dieser Anlage angeschlossen und mit diesem mindesten einem Bauteil oder dieser Anlage in einem Kühl- und / oder Schmierkreislauf verbunden ist, wobei ein wasserbasiertes, ölfreies Kühl- und Schmiermittel verwendet wird, **dadurch gekennzeichnet, dass** ein Spülungsvorgang für die mindestens eine Brennstoffzelle (20) des Brennstoffzellensystems angestoßen wird, wenn eine Kontaminierung der aktiven Schichten einer Brennstoffzelle (20) durch das wasserbasierte, ölfreie Kühl-und Schmiermittel erkannt wird.

2. Verfahren nach Anspruch 1, **dadurch gekennzeichnet, dass** das Kühl und Schmiermittel wasserbasierend ist und ausschließlich wasserlösliche Zusatzstoffe beinhaltet.

3. Verfahren nach Anspruch 1, **dadurch gekennzeichnet, dass** das Brennstoffzellensystem angeschlossen ist an Hilfsaggregate wie Lager, Kompressoren, Turbolader, Elektromotoren, Getriebe, Batterie, Leistungselektronik.

4. Verfahren nach Anspruch 3, **dadurch gekennzeichnet, dass** das Brennstoffzellensystem sowie die angeschlossenen Hilfsaggregate einen gemeinsamen Kühl-Schmierkreislauf aufweisen.

5. Verfahren nach Anspruch 1, **dadurch gekennzeichnet, dass** der Spülvorgang an der Brennstoffzelle (20) mit zusätzlichem Wasser zu dem normalen Wasser, das im Betrieb der Brennstoffzelle (20) zugeführt wird, erfolgt.

6. Verfahren nach Anspruch 1, **dadurch gekennzeichnet, dass** das Erkennen der Kontaminierung durch Messung eines Leistungsabfalls der Brennstoffzelle (20) erfolgt, wobei eine oder mehrere Messungen aus der Gruppe Strommessung,-Spannungsmessung, Impedanz- oder Klirrfaktoranalyse, Abgasmessungen an der Anoden- und/oder Kathodenseite (58, 57), Zyklovoltammetrie angewendet werden.

7. Verfahren nach Anspruch 1, **dadurch gekennzeichnet, dass** der Spülvorgang durch Einbringen zusätzlicher Feuchtigkeit aus einem Befeuchter (12) über eine Luftzufuhrleitung erfolgt.

8. Verfahren nach Anspruch 1, **dadurch gekennzeichnet, dass** der Spülvorgang durch Erhöhung des Innendrucks in der Luftseite der Brennstoffzelle (20) erfolgt.

9. Verfahren nach Anspruch 1, **dadurch gekennzeichnet, dass** der Spülvorgang durch Verkleinerung des Luft Lambda Wertes kathodenseitig (57) erfolgt.

10. Verfahren nach Anspruch 1, **dadurch gekennzeichnet, dass** der Spülvorgang durch Abkühlung befeuchteter Luft an den Bipolarplatten (53) der Brennstoffzelle (20) erfolgt.

11. Verfahren nach Anspruch 1, **dadurch gekennzeichnet, dass** der Spülvorgang durch erhöhte elektrische Leistungsabnahmen erfolgt.

12. Verfahren nach Anspruch 1, **dadurch gekennzeichnet, dass** der Spülvorgang durch Zufuhr von Wasser über den Befeuchter (12) anodenseitig erfolgt.

13. Verfahren nach Anspruch 1, **dadurch gekennzeichnet, dass** der Spülvorgang durch direktes Einbringen von Zusatzwasser erfolgt.

14. Verfahren nach Anspruch 1, **dadurch gekennzeichnet, dass** der Spülvorgang durch Einbringen warmer feuchter Luft erfolgt, wobei eine Auskondensation stattfindet.

15. Verfahren nach Anspruch 1, **dadurch gekennzeichnet, dass** der Spülvorgang durch Druckreduzierung und erhöhte Luftfeuchtigkeit erfolgt.

16. Verfahren nach einem der vorherigen Ansprüche, **dadurch gekennzeichnet, dass** der Spülvorgang durch mehrfache Wiederholung des Spülvorgangs und/oder durch einfache oder mehrfache Kombination von unterschiedlichen Methoden des Spülens erfolgt und mit einem Trocknungsprozess abgeschlossen wird.

17. Brennstoffzellensystem mit mindestens einer Brennstoffzelle (20), die eingangsseitig mit einem Verdichter (10) verbunden ist, der wiederum in Verbindung mit mindestens einem Bauteil des Antriebs eines Fahrzeugs oder in Verbindung mit mindestens einem Bauteil einer stationären Anlage steht, **dadurch gekennzeichnet, dass** das Brennstoffzellensystem so konfiguriert ist, dass ein Verfahren nach einem der vorherigen Ansprüche ausführbar ist.

## Claims

1. Method for operating a fuel-cell system, which is attached to at least one further component of the drive or, in a stationary system for electricity-heat generation, to at least one further component of this system and is connected to this at least one component or this system in a cooling and/or lubricating circuit, wherein a water-based, oil-free coolant and lubricant is used, **characterized in that** a flushing procedure for the at least one fuel cell (20) of the fuel-cell system is initiated when a contamination of the active layers of a fuel cell (20) by the water-based, oil-free coolant and lubricant is recognized.

2. Method according to Claim 1, **characterized in that** the coolant and lubricant is water-based and exclusively contains water-soluble additives.

3. Method according to Claim 1, **characterized in that** the fuel-cell system is attached to auxiliary assemblies such as bearings, compressors, turbochargers, electric motors, transmissions, batteries, power electronics.

4. Method according to Claim 3, **characterized in that** the fuel-cell system and the attached auxiliary assemblies have a shared cooling-lubricating circuit.

5. Method according to Claim 1, **characterized in that** the flushing procedure on the fuel cell (20) is performed using additional water to the normal water, which is supplied in operation of the fuel cell (20).

6. Method according to Claim 1, **characterized in that** the recognition of the contamination is performed by measuring a power drop of the fuel cell (20), wherein one or more measurements from the group of current measurement, voltage measurement, impedance or harmonic distortion analysis, exhaust gas measurements on the anode and/or cathode side (58, 57), cyclic voltammetry are applied.

7. Method according to Claim 1, **characterized in that** the flushing procedure is performed by introducing additional moisture from a humidifier (12) via an air supply line.

8. Method according to Claim 1, **characterized in that** the flushing procedure is performed by increasing the internal pressure in the air side of the fuel cell (20).

9. Method according to Claim 1, **characterized in that** the flushing procedure is performed by decreasing the air lambda value on the cathode side (57).

10. Method according to Claim 1, **characterized in that** the flushing procedure is performed by cooling humidified air on the bipolar plates (53) of the fuel cell (20).

11. Method according to Claim 1, **characterized in that** the flushing procedure is performed by increased electrical power reductions.

12. Method according to Claim 1, **characterized in that** the flushing procedure is performed by supply of water via the humidifier (12) on the anode side.

13. Method according to Claim 1, **characterized in that** the flushing procedure is performed by direct introduction of additional water.

14. Method according to Claim 1, **characterized in that** the flushing procedure is performed by introducing warm, moist air, wherein condensation occurs.

15. Method according to Claim 1, **characterized in that** the flushing procedure is performed by pressure reduction and elevated ambient humidity.

16. Method according to one of the preceding claims, **characterized in that** the flushing procedure is performed by multiple repetitions of the flushing procedure and/or by single or multiple combination of different methods of the flushing and is terminated using a drying process.

17. Fuel-cell system having at least one fuel cell (20), which is connected on the inlet side to a compressor (10), which is in turn connected to at least one component of the drive of a vehicle or is connected to at least one component of a stationary system, **characterized in that** the fuel-cell system is configured such that a method according to one of the preceding claims can be carried out.

## Revendications

1. Procédé destiné au fonctionnement d'un système de piles à combustible raccordé à au moins un composant supplémentaire de l'entraînement ou, dans un système stationnaire de production de chaleur de courant, à au moins un composant supplémentaire de cette installation et relié au moins à ce composant ou cette installation dans un circuit de refroidissement et/ou de graissage, un moyen réfrigérant et lubrifiant aqueux sans huile étant utilisé, **caractérisé en ce qu'**un processus de rinçage suit pour l'au moins une pile à combustible (20) du système de piles à combustible lorsqu'une contamination des couches actives d'une pile à combustible (20) par le moyen réfrigérant et lubrifiant aqueux sans huile est détectée.

2. Procédé selon la revendication 1, **caractérisé en ce que** le moyen réfrigérant et lubrifiant est à base d'eau et contient exclusivement des additifs solubles dans l'eau.

3. Procédé selon la revendication 1, **caractérisé en ce que** le système de piles à combustible est raccordé à des agrégats auxiliaires tels que des paliers de roulement, des compresseurs, des turbocompresseurs, des moteurs électriques, une boîte de vitesses, une batterie, un système électronique de puissance.

4. Procédé selon la revendication 3, **caractérisé en ce que** le système de piles à combustible ainsi que les agrégats auxiliaires raccordés comportent un circuit de refroidissement-lubrification commun.

5. Procédé selon la revendication 1, **caractérisé en ce que** le processus de rinçage est réalisé au niveau de la pile à combustible (20) avec de l'eau supplémentaire par rapport à l'eau normale amenée en fonctionnement à la pile à combustible (20).

6. Procédé selon la revendication 1, **caractérisé en ce que** la détection de la contamination se produit par mesure d'une chute de puissance de la pile à combustible (20), une ou plusieurs mesures étant utilisées à partir du groupe composé de la mesure de courant, mesure de tension, analyse de facteur d'impédance ou de Klirr, mesures de gaz d'échappement du côté d'anode et/ou de cathode (58, 57), cyclovoltamétrie.

7. Procédé selon la revendication 1, **caractérisé en ce que** le processus de rinçage se produit par apport d'humidité supplémentaire à partir d'un humidificateur (12) via une conduite d'amenée d'air.

8. Procédé selon la revendication 1, **caractérisé en ce que** le processus de rinçage se produit par augmentation de la pression intérieure dans le côté d'air de la pile à combustible (20).

9. Procédé selon la revendication 1, **caractérisé en ce que** le processus de rinçage se produit par diminution de la valeur lambda d'air du côté de cathode (57).

10. Procédé selon la revendication 1, **caractérisé en ce que** le processus de rinçage se produit par refroidissement de l'air humidifié au niveau des plaques bipolaires (53) de la pile à combustible (20).

11. Procédé selon la revendication 1, **caractérisé en ce que** le processus de rinçage se produit par retraits accrus de puissance électrique.

12. Procédé selon la revendication 1, **caractérisé en ce que** le processus de rinçage se produit du côté d'anode par amenée d'eau via l'humidificateur (12).

13. Procédé selon la revendication 1, **caractérisé en ce que** le processus de rinçage se produit par amenée directe d'eau supplémentaire.

14. Procédé selon la revendication 1, **caractérisé en ce que** le processus de rinçage se produit par amenée d'air humide chaud, une condensation se produisant alors.

15. Procédé selon la revendication 1, **caractérisé en ce que** le processus de rinçage se produit par réduction de pression et augmentation de l'humidité de l'air.

16. Procédé selon l'une quelconque des revendications précédentes, **caractérisé en ce que** le processus de rinçage se termine par une multiple répétition du processus de rinçage et/ou par une combinaison simple ou multiple de différentes méthodes de rinçage et avec un traitement de séchage.

17. Système de piles à combustible avec au moins une pile à combustible (20) reliée du côté d'entrée à un compresseur (10), à son tour relié à au moins un composant de l'entraînement d'un véhicule ou à au moins un composant d'une installation stationnaire, **caractérisé en ce que** le système de piles à combustible est configuré de telle sorte qu'un procédé selon l'une quelconque des revendications précédentes peut être mis en oeuvre.
